# EUROPEAN PATENT SPECIFICATION

(11) **EP 3 450 762 B1**
(45) Date of publication and mention of the grant of the patent: **16.03.2022**
(21) Application number: 17789743.6
(22) Date of filing: 09.01.2017
(51) Int. Cl.: F04C 18/02, F04C 29/02, F04C 29/00, F04C 23/00, F04C 29/12

(54) **SCROLL COMPRESSOR**
SPIRALVERDICHTER
COMPRESSEUR À SPIRALE

(30) Priority: 26.04.2016 KR 20160051045
(43) Date of publication of application: 06.03.2019
(73) Proprietor: LG Electronics Inc., Seoul 07336 (KR)
(72) Inventor: KIM, Taekyoung, Seoul 08592 (KR); LEE, Kangwook, Seoul 08592 (KR); KIM, Cheolhwan, Seoul 08592 (KR); LEE, Byeongchul, Seoul 08592 (KR)
(74) Representative: Vossius & Partner Patentanwälte Rechtsanwälte mbB
(86) International application number: PCT/KR2017/000277
(87) International publication number: WO 2017/188558

(56) References cited:
- CN-A- 101 358 597
- JP-A- S5 718 491
- JP-A- 2012 211 548
- KR-A- 20080 067 262
- KR-A- 20120 109 088
- KR-A- 20160 017 993
- KR-B1- 101 130 465
- US-A- 4 768 936
- US-A- 5 421 708
- US-A1- 2008 170 957
- US-A1- 2016 040 672

## Description

### BACKGROUND OF THE INVENTION

### 1. Field of the Invention

This specification relates to a scroll compressor, and more particularly, a scroll compressor where a compression part is disposed below a motor part.

### 2. Background of the Invention

Generally, a compressor is applied to a vapor-compression type refrigerating cycle such as a refrigerator or an air conditioner (hereinafter, will be referred to as a refrigerating cycle). The compressor may be categorized into a hermetic compressor where a motor part and a compression part operated by the motor part are installed at a hermetic inner space of a casing, and an open compressor where the motor part is installed outside the casing. Refrigerating devices for home or company mainly use the hermetic compressor.

The compressor may be categorized into a reciprocating compressor, a rotary compressor, a scroll compressor, etc. according to a refrigerant compression method. The reciprocating compressor compresses a refrigerant by linearly moving a piston by a piston driving unit, and the rotary compressor compresses a refrigerant by using a rolling piston which performs an eccentric rotational operation at a compression space of a cylinder, and by using a vane which divides the compression space of the cylinder into a suction chamber and a discharge chamber by contacting the rolling piston. And the scroll compressor consecutively compresses a refrigerant by forming a pair of compression chambers (a suction chamber, an intermediate pressure chamber, and a discharge chamber) between a fixed scroll and an orbiting scroll.

The compressor may be categorized into an upper compression type compressor and a lower compression type compressor according to a position of a motor part and a compression part. The upper compression type compressor means a compressor where a compression part is positioned above a motor part, whereas the lower compression type compressor means a compressor where a compression part is positioned below a motor part. In case of the lower compression type compressor, a refrigerant discharged to an inner space of a casing moves to a discharge pipe disposed at an upper part of the casing. In this case, oil is collected in an oil storage space provided below the compression part. Here, the oil may be discharged to the outside of the compressor in a mixed state with a refrigerant, or may remain above the motor part by a pressure of a refrigerant.

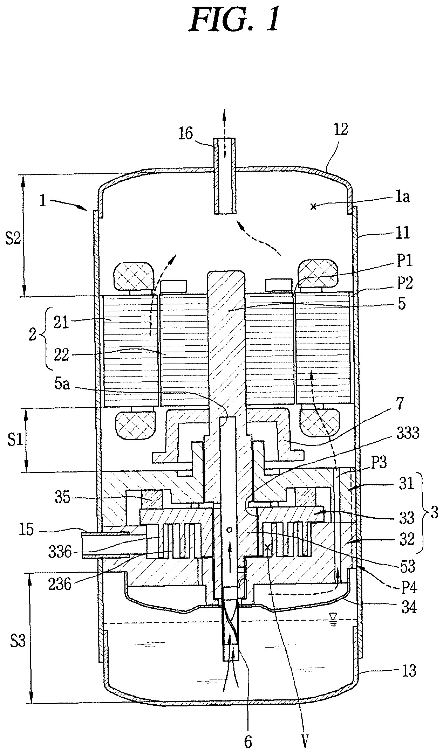

FIG. 1 is a longitudinal sectional view illustrating an example of a lower compression type scroll compressor in accordance with the conventional art.

As shown, the conventional lower compression type scroll compressor includes a casing 1 having an inner space 1a; a motor part 2 provided at the inner space 1a of the casing 1, and having a stator and a rotor of a driving motor; a compression part 3 provided below the motor part 2; and a rotation shaft 5 configured to transmit a rotational force of the motor part 2 to the compression part 3.

A refrigerant suction pipe 15 communicated with the compression part 3 is connected to a lower part of the casing 1. And a refrigerant discharge pipe 16, configured to discharge a refrigerant discharged to the inner space 1a of the casing 1 to a refrigerating cycle, is connected to an upper part of the casing 1.

The inner space 1a of the casing 1 may be divided into a first space (S1) between the motor part 2 and the compression part 3, a second space (S2) formed above the motor part 2 and communicated with the first space (S1), and a third space (S3) formed below the compression part 3, communicated with the second space (S2), and forming an oil storage space.

The first space (S1) and the second space (S2) are communicated with each other by a space between an inner circumferential surface of a stator 21 and an outer circumferential surface of a rotor 22, and by a first passage (P1) formed at an inner side of slits 212b of the rotor 22. And the second space (S2) and the third space (S3) are communicated with each other by a second passage (P2) formed between an inner circumferential surface of the casing 1 and an outer circumferential surface of the motor part 2, and by a third passage (P3) formed between the inner circumferential surface of the casing 1 and an outer circumferential surface of the compression part 3.

The compression part 3 includes a main frame 31 formed below the stator 21, and fixed to an inner circumferential surface of the casing 1; a non-orbiting scroll coupled to a lower side of the main frame 31 (hereinafter, will be referred to as a fixed scroll); and an orbiting scroll 33 disposed between the main frame 31 and the fixed scroll 32, and coupled to an eccentric portion 53 of the rotation shaft 5 to perform an orbiting motion, and forming a pair of compression chambers (V) between itself and the fixed scroll 32.

An unexplained reference numeral 5a denotes an oil supply passage, 7 denotes a balance weight, 11 denotes a cylindrical shell, 12 denotes an upper cap, 13 denotes a lower cap, 34 denotes a discharge cover, 35 denotes an Oldham's ring, 326 denotes a fixed wrap, 333 denotes a rotation shaft coupling portion, and 334 denotes an orbiting wrap.

In the conventional lower compression type scroll compressor, a refrigerant and oil, discharged to the first space (S1) from the compression part 3, moves to the second space (S2) provided above the motor part 2 along the first passage (P1) provided at the motor part 2. Then, the refrigerant has the oil separated therefrom at the second space (S2), and then is discharged to the outside through the refrigerant discharge pipe 16. On the other hand, the oil is collected in the third space (S3) provided below the casing 1 along the second passage (P2) and the third passage (P3).

However, in the conventional lower compression type scroll compressor, oil separated at the second space (S2) should move to the third space (S3) along the second passage (P2) formed between an inner circumferential surface of the casing 1 and an outer circumferential surface of the stator 21. In this case, a large amount of oil may not be collected in an oil storage space due to a narrow area of the second passage (P2), but may remain at the second space (S2). As a result, a small amount of oil is stored at the oil storage space, and thus oil is not sufficiently supplied to the compression part 3. This may cause a frictional loss or abrasion at the compression part.

Further, in the conventional lower compression type scroll compressor, oil which remains at the second space (S2) is mixed with a refrigerant discharged from the compression part 3, and then is discharged to the outside of the compressor. This may increase oil deficiency in the compressor.

Further, in the conventional lower compression type scroll compressor, oil separated at the second space (S2) flows down only by its weight to be collected in the oil storage space. Accordingly, when the second passage (P2) has a narrow area, oil may not smoothly pass through the second passage (P2). This may reduce the amount of oil to be collected.

Further, in the conventional lower compression type scroll compressor, the second passage (P2) at the motor part 2 is formed in the same direction as a coupling direction of the refrigerant discharge pipe 16. As a result, a refrigerant introduced into the second space (S2) via the motor part 2 is rapidly discharged to the refrigerant discharge pipe 16. This may cause oil not to be effectively separated from a refrigerant. JPS5718491A discloses a scroll compressor according to the preamble of claim 1.

CN101358597A discloses an upper scroll compressor type comprising an oil separator fixed to the non-orbiting scroll and coupled to the discharge port.

### SUMMARY OF THE INVENTION

Therefore, an aspect of the detailed description is to provide a scroll compressor capable of smoothly collecting oil separated from a refrigerant to an oil storage space, by separating a refrigerant passage and an oil passage from each other in a casing.

Another aspect of the detailed description is to provide a scroll compressor capable of reducing the amount of oil to be discharged, by preventing oil separated from a refrigerant in a casing from being mixed with the refrigerant discharged from a compression part.

Another aspect of the detailed description is to provide a scroll compressor capable of forcibly collecting oil separated at a space of a motor part to an oil storage space.

Another aspect of the detailed description is to provide a scroll compressor capable of effectively separating oil from a refrigerant at a space of a motor part.

To achieve these and other advantages and in accordance with the purpose of this specification, as embodied and broadly described herein, there is provided a scroll compressor, including: a casing which contains oil at a lower space thereof; a driving motor provided at a position spaced from an upper end of the casing by a predetermined gap, such that an upper space is formed in the casing; a rotation shaft coupled to a rotor of the driving motor, and having an oil supply passage to guide the oil contained in the casing to an upper side; a frame provided below the driving motor; a fixed scroll provided below the frame, and having a fixed wrap; an orbiting scroll provided between the frame and the fixed scroll, having an orbiting wrap so as to form a compression chamber by being engaged with the fixed wrap, and having a rotation shaft coupling portion for coupling the rotation shaft thereto in a penetrating manner; and an oil collection unit including an oil separator provided at the upper space of the casing and configured to separate oil from a refrigerant, and including an oil guiding portion configured to guide the oil separated by the oil separator to the lower space of the casing.

According to the invention, the oil separator includes an oil separation container having a predetermined oil separation space, and with which one end of the oil guiding portion is communicated; and a communication pipe provided at one side of the oil separation box, and configured to communicate the oil separation space with the upper space.

According to the invention, one end of the refrigerant discharge pipe which penetrates the casing communicates with the oil separation container.

In an embodiment of the present invention, a lengthwise center line of the communication pipe at an end of the communication pipe may form a predetermined angle with the rotation shaft in an axial direction.

In an embodiment of the present invention, a lengthwise center line of the refrigerant discharge pipe may form a predetermined angle with the lengthwise center line of the communication pipe.

In an embodiment of the present invention, the oil guiding portion may include: an oil collection pipe having one end connected to the oil separation box; and an oil pump having an inlet to which another end of the oil collection pipe is connected, and configured to pump oil separated at the oil separation box.

In an embodiment of the present invention, the oil guiding portion may be formed as an oil collection pipe having one end connected to the oil separation box, and another end of the oil collection pipe may be communicated with a region having a lower pressure than an inner pressure of the oil separation box.

In an embodiment of the present invention, an oil supply passage for guiding oil contained in the casing may be formed at the rotation shaft, and a shaft accommodating portion for supporting the rotation shaft may be formed at the fixed scroll. An oil supply hole for guiding oil sucked through the oil supply passage to a bearing surface with the shaft accommodating portion may be formed at the rotation shaft. And an oil passing hole may be formed at the shaft accommodating portion such that another end of the oil collection pipe may be communicated with the oil passing hole.In an embodiment of the present invention, an oil chamber communicated with the oil passing hole may be formed on an outer circumferential surface of the rotation shaft, or an inner circumferential surface of the shaft accommodating portion corresponding thereto.

In an example which does not fall within the scope of the claims, the oil separator may be
formed as an oil separation plate provided at the upper space of the casing and configured to divide the upper space into two parts in an axial direction. The oil separation plate may be provided with a plurality of through holes for communicating upper and lower sides of the oil separation plate with each other. And one of the through holes may be communicated with the oil guiding portion.

In an embodiment of the present invention, the driving motor may include a stator fixed to an inner circumferential surface of the casing, and a rotor rotatably provided in the stator with an air gap which forms a first passage. A plurality of cut-out surfaces may be formed on an outer circumferential surface of the stator in a circumferential direction, such that a space which forms a second passage may be formed between the outer circumferential surface of the stator and the inner circumferential surface of the casing. And a passage separator configured to separate the first and second passages from each other may be provided between the driving motor and the frame.

In an embodiment of the present invention, an inner space of the casing is divided into an oil
storage space for containing oil, and a mixture space for containing a refrigerant and oil in a mixed state; the driving motor is provided at the mixture
space of the casing; the configured to separate oil
from a refrigerant at the mixture space; and the oil guiding portion has one end
connected to the oil separator, and another end communicated with the oil storage space and configured to guide the oil separated by the oil separator to the oil storage space.

In an embodiment of the present invention, the oil separator may be implemented as a container having a hermetic oil separation space. container may have an inlet which communicates the mixture space and the oil separation space with each other. And a center line of the inlet may form an angle with a center line of the first passage.

In an embodiment of the present invention, said another end of the oil guiding portion may be connected to an inlet of an oil pump which pumps oil to an oil supply passage of the rotation shaft.

In an embodiment of the present invention, said another end of the oil guiding portion may be connected to an oil supply passage of the rotation shaft, such that oil may be guided to the oil supply passage by a pressure difference between two ends of the oil guiding portion.

In an embodiment of the present invention, the scroll compressor may further include a passage separator provided between the motor part and the compression part, and configured to separate a refrigerant passage and an oil passage from each other.

The scroll compressor according to the present invention may have the following advantages.

Firstly, since an upper space and a lower space of the casing are connected to each other by the oil collection pipe, oil separated from a refrigerant may be smoothly collected in the oil storage space.

Further, since the oil separator is installed between the motor part and the compression part, oil which moves to the lower space from the upper space of the casing may be prevented from being mixed with a refrigerant. This may allow oil separated from a refrigerant to be smoothly collected.

Further, by the oil collection unit for forcibly collecting oil separated at the upper space to the lower space using a rotational motion of the rotation shaft, oil separated at the upper space may be rapidly collected in the lower space.

Further, since the oil separator is installed at the upper space, oil may be effectively separated from a refrigerant at the upper space, and the amount of oil to be discharge may be reduced. This may enhance efficiency of the scroll compressor.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the appended claims will
become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a longitudinal sectional view illustrating an example of a lower compression type scroll compressor in accordance with the conventional art;
FIG. 2 is a longitudinal sectional view illustrating an example of a lower compression type scroll compressor according to the present invention;
FIG. 3 is a sectional view taken along line 'IV-IV' in FIG. 2;
FIG. 4 is a longitudinal sectional view, which illustrates a compression part of FIG. 3 in an enlarged manner;
FIG. 5 is a longitudinal sectional view, which illustrates an oil separator in the lower compression type scroll compressor of FIG. 2;
FIG. 6 is a sectional view taken along line 'V-V' in FIG. 5;
FIG. 7 is a longitudinal sectional view, which illustrates an example, which does not fall within the scope of the claims, of an oil separator in the lower compression type scroll compressor of FIG. 2;
FIG. 8 is a longitudinal sectional view, which illustrates an oil guiding portion in the lower compression type scroll compressor of FIG. 2;
FIG. 9 is a longitudinal sectional view, which illustrates the oil guiding portion of FIG. 8 in an enlarged manner;
FIG. 10 is a longitudinal sectional view, which illustrates another embodiment of the oil guiding portion in the lower compression type scroll compressor of FIG. 2; and
FIG. 11 is a longitudinal sectional view, which illustrates an oil collection pipe of the oil guiding portion in the lower compression type scroll compressor of FIG. 2.

### DETAILED DESCRIPTION OF THE INVENTION

Hereinafter, a scroll compressor according to the present invention will be explained in more detail with reference to the attached drawings.

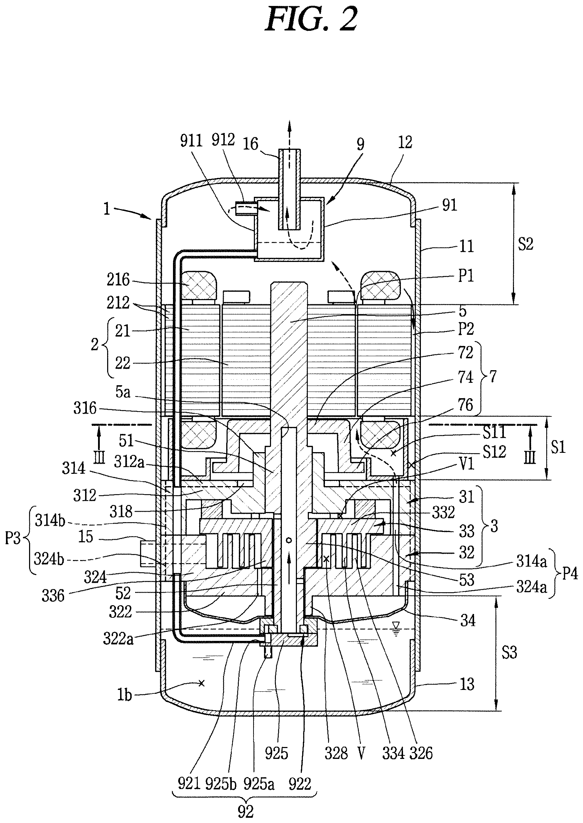

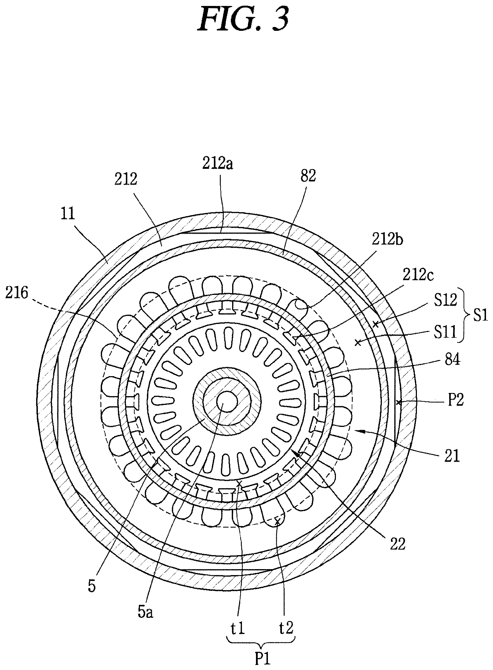

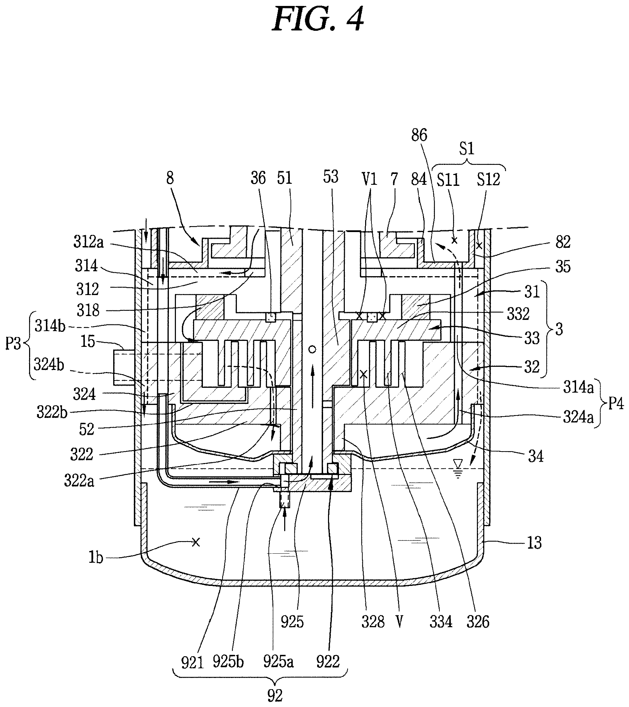

FIG. 2 is a longitudinal sectional view illustrating an example of a lower compression type scroll compressor according to the present invention. FIG. 3 is a sectional view taken along line 'IV-IV' in FIG. 2. And FIG. 4 is a longitudinal sectional view, which illustrates a compression part of FIG. 3 in an enlarged manner.

As shown in FIGS. 2 to 4, a lower compression type scroll compressor according to this embodiment of the present invention may include a casing 1 having an inner space; a motor part 2 provided at an upper part of the inner space of the casing 1, and which forms a driving motor; a compression part 3 disposed below the motor part 2; a rotation shaft 5 which transmits a driving force to the compression part 3 from the motor part 2; and a flow path separator installed between the motor part 2 and the compression part 3, and configured to separate a refrigerant flow path and an oil flow path from each other.

The inner space 1a of the casing 1 may be divided into a first space (S1) between the motor part 2 and the compression part 3, a second space (S2) communicated with the first space (S1) and serving as an upper space of the motor part 2, and a third space (S3) communicated with the second space (S2) and serving as a lower space of the compression part 3. Thus, the flow path separator 8 may be provided at the first space (S1).

The casing 1 may include a cylindrical shell 11 which forms a hermetic container; an upper shell 12 which forms the hermetic container together by covering an upper part of the cylindrical shell 11; and a lower shell 13 which forms the hermetic container together by covering a lower part of the cylindrical shell 11, and which forms an oil storage space 1b.

A refrigerant suction pipe 15 may be penetratingly-formed at a side surface of the cylindrical shell 11, thereby being directly communicated with a suction chamber of the compression part 3. And a refrigerant discharge pipe 16 communicated with the inner space of the casing 1 may be installed at an upper part of the upper shell 12. The refrigerant discharge pipe 16 may be installed to be communicated with the inner space of the casing 1 in an axial direction.

A stator 21 which constitutes the motor part 2 may be installed at an upper part of the casing 1, and a rotor 22 which constitutes the motor part 2 together with the stator 21 and rotated by a reciprocal operation with the stator 21 may be rotatably installed in the stator 21. The stator 21 and the rotor 22 may be spaced from each other by a predetermined gap, such that a first passage (P1) to be explained later may be formed.

As shown in FIG. 3, the stator 21 may include a stator core 212 having a ring shape and formed as a plurality of sheets are laminated on each other, and a coil 216 wound on the stator core 212. A cut-out surface 212a, having an angular form in a circumferential direction, may be formed on an outer circumferential surface of the stator core 212. A predetermined space may be formed between the outer circumferential surface of the stator core 212 (more precisely, the cut-out surface 212a) and an inner circumferential surface of the cylindrical shell 11, such that a second passage (P2) may be formed.

However, the second passage (P2) between the outer circumferential surface of the stator core 212 and the inner circumferential surface of the cylindrical shell 11 may be formed in another manner. For instance, the second passage (P2) may be formed as the outer circumferential surface of the stator core 212 is formed in a circular shape and a groove (not shown) is recessed from the outer circumferential surface of the stator core 212.

The stator 22 may be formed in an approximate cylindrical shape, and a predetermined gap (t1) may be provided between the stator 21 and the rotor 22 such that a first passage (P1) may be formed between an outer circumferential surface of the rotor 22 and an inner circumferential surface of the stator 21. A plurality of slots 212b for winding the coil 216 thereon may be formed on the inner circumferential surface of the stator 21. And a gap (t2) is formed between each slit 212b and the coil 216, and the gap (t2) forms the first passage (P1) together with the gap (t1) between the stator 21 and the rotor 22.

A main frame 31 which constitutes the compression part 3 may be fixed to an inner circumferential surface of the casing 1, below the stator 21 with a predetermined gap.

The main frame 31 may include a frame plate portion (hereinafter, will be referred to as a first plate portion) 312 having an approximate circular shape; a frame side wall portion 314 (hereinafter, will be referred to as a first side wall portion) downward protruding from an outer circumference of the first plate portion 312; and a frame shaft accommodating portion (hereinafter, will be referred to as a first shaft accommodating portion) 316 provided at a central part of the first plate portion 312, and configured to pass the rotation shaft 5 therethrough.

An outer circumference of the first side wall portion 314 may contact an inner circumferential surface of the cylindrical shell 11, and a lower end of the first side wall portion 314 may contact an upper end of a fixed scroll side wall portion 324 to be explained later.

The first side wall portion 314 may be provided with a frame communication hole (hereinafter, will be referred to as a first communication hole) 314a which passes through the inside of the first side wall portion 314 in an axial direction and which forms a refrigerant discharge passage. The first communication hole 314a may have an inlet communicated with a fixed scroll communication hole 324a to be explained alter, and may have an outlet communicated with the first space (S1).

A plurality of frame communication grooves 314b (hereinafter, will be referred to as first communication grooves) may be formed on an outer circumferential surface of the first side wall portion 314 in a circumferential direction, the groove 314b concaved in an axial direction and forming an oil passage as two sides thereof in an axial direction are open. The first communication grooves 314b has an inlet communicated with the second space (S2) through the second passage (P2), and has an outlet communicated with an inlet of a scroll communication groove (hereinafter, will be referred to as a second communication groove) 324b to be explained later and provided on an outer circumferential surface of the fixed scroll 32. A space may be formed between the second communication groove 324b and the cylindrical shell 11, such that oil may be guided to the third space (S3) therethrough.

A first shaft accommodating portion 316 may be protruded from an upper surface of the first plate portion 312, toward the motor part 2. A first bearing portion, configured to support a main bearing portion 51 of the rotation shaft 5 to be explained later by passing the main bearing portion 51 therethrough, may be penetratingly-formed at the first shaft accommodating portion 316.

An oil pocket 318, configured to collect oil discharged from a space between the first shaft accommodating portion 316 and the rotation shaft 5, may be formed on an upper surface of the first plate portion 312. An oil collection passage 312a, configured to communicate the oil pocket 318 with the first communication groove 314b, may be formed at one side of the oil pocket 318.

The oil pocket 318 may be concaved from an upper surface of the first plate portion 312, and may be formed in a ring shape along an outer circumferential surface of the first shaft accommodating portion 316.

The oil collection passage 312a may be formed on an upper surface of the first plate portion 312, in the form of a concaved groove. In this case, since the oil collection passage 312a may be exposed to a refrigerant by being communicated with a space between a first partition wall portion 82 and a second partition wall portion 84, a cover may be provided between the space between the first partition wall portion 82 and the second partition wall portion 84 and the oil collection passage 312a.

The fixed scroll 32 may be coupled to a lower surface of the main frame 31.

The fixed scroll 32 may include a fixed scroll plate portion (second plate portion) 322 having an approximate circular shape; a fixed scroll side wall portion (hereinafter, a second side wall portion) 324 upward-protruded from an outer circumference of the second plate portion 322; a fixed wrap 326 protruded from an upper surface of the second plate portion 322, and engaged with an orbiting wrap 334 of an orbiting scroll 33 to be explained later to form a compression chamber (V); and a fixed scroll shaft accommodating portion (hereinafter, a second shaft accommodating portion) 328 formed at a central part of a rear surface of the second plate portion 322, and configured to pass the rotation shaft 5 therethrough.

A discharge opening 322a, configured to guide a compressed refrigerant to an inner space of a discharge cover 34 from the compression chamber (V), may be formed at the second plate portion 322. A position of the discharge opening 322a may be arbitrarily set according to a required discharge pressure, etc.

Since the discharge opening 322a is formed toward the lower shell 13, the discharge cover for accommodating a discharged refrigerant and guiding the refrigerant to the fixed scroll communication groove 324b to be explained later may be coupled to a lower surface of the fixed scroll 32. The discharge cover 34 may be coupled to the lower surface of the fixed scroll 32 in a sealed state, such that a refrigerant discharge passage and the oil storage space (S3) may be separated from each other.

The discharge cover 34 may be formed such that its inner space may accommodate the discharge opening 322a and accommodate an inlet of the fixed scroll communication groove 324b to be explained later. A through hole (not shown), configured to pass an oil feeder 6 therethrough, may be formed at the discharge cover 34, the oil feeder coupled to a sub bearing portion 52 of the rotation shaft 5 to be explained later and immersed in the oil storage space 1b of the casing 1.

An outer circumference of the second side wall portion 324 may contact an inner circumferential surface of the cylindrical shell 11, and an upper end of the second side wall portion 324 may contact a lower end of the first side wall portion 314.

A fixed scroll communication hole (hereinafter, will be referred to as a second communication hole) 324a, configured to form a refrigerant passage together with the first communication hole 314a by passing through the inside of the second side wall portion 324 in an axial direction, may be provided at the second side wall portion 324. The second communication hole 324a may be formed to correspond to the first communication hole 314a. An inlet of the second communication hole 324a may be communicated with the inner space of the discharge cover 34, and an outlet thereof may be communicated with the inlet of the first communication hole 314a.

The second communication hole 324a may communicate the inner space of the discharge cover 34 with the first space (S1), so as to guide a refrigerant discharged to the inner space of the discharge cover 34 from the compression chamber (V), to the first space (S1), together with the first communication hole 314a. Hereinafter, a flow path by the second communication hole 324a and the first communication hole 314a is defined as a discharge passage.

The second side wall portion 324 may be provided with a fixed scroll communication groove (hereinafter, will be referred to as a second communication groove) 324b concaved on an outer circumferential surface of the second side wall portion 324 in an axial direction and forming an oil passage as two sides thereof in an axial direction are open. The second communication groove 324b may be formed to correspond to the first communication groove 314b of the main frame 31. An inlet of the second communication groove 324b may be communicated with an outlet of the first communication groove 314b, and an outlet thereof may be communicated with the third space (S3) (oil storage space). The second communication groove 324b may form a space between the second side wall portion 324 and the cylindrical shell 11.

The second communication groove 324b may communicate the second space (S2) with the third space (S3) together with the first communication groove 314b, such that oil may move from the second space (S2) to the third space (S3). Hereinafter, a flow path by the first communication groove 314b and the second communication groove 324b is defined as a third passage (P3).

The refrigerant suction pipe 15 may be installed at the second side wall portion 324 so as to be communicated with a suction side of the compression chamber (V). The refrigerant suction pipe 15 may be spaced from the second communication hole 324a.

A second shaft accommodating portion 328 may be protruded from a lower surface of the second plate portion 322, toward the third space (S3), i.e., the oil storage space. A second bearing portion, configured to insertion-support a sub bearing portion 52 of the rotation shaft 5 to be explained later, may be provided at the second shaft accommodating portion 328.

The orbiting scroll 33, which performs an orbiting motion in a coupled state to the rotation shaft 5, and which forms a pair of compression chambers (V) between itself and the fixed scroll 32, may be installed between the main frame 31 and the fixed scroll 32.

The orbiting scroll 33 may include an orbiting scroll plate portion having an approximate circular shape (hereinafter, will be referred to as a third plate portion) 332; an orbiting wrap 334 protruded from a lower surface of the third plate portion 332, and engaged with the fixed wrap 326; and a rotation shaft coupling portion 336 provided at a central part of the third plate portion 332, and rotatably-coupled to an eccentric portion 53 of the rotation shaft 5 to be explained later.

The orbiting scroll 33 may be supported by the fixed scroll 32, as an outer circumference of the third plate portion 332 is mounted to an upper end of the second side wall portion 324, and as a lower end of the orbiting wrap 334 contacts an upper surface of the second plate portion 322.

An outer circumference of the rotation shaft coupling portion 336 is connected to the orbiting wrap 334, thereby forming the compression chambers (V) together with the fixed wrap 326 during a compression process. The fixed wrap 326 and the orbiting wrap 334 may have an involute shape, but may have various shapes.

The eccentric portion 53 of the rotation shaft 5 to be explained later may be inserted into the rotation shaft coupling portion 336, so as to be overlapped with the orbiting wrap 334 or the fixed wrap 326 in a radius direction of the scroll compressor. With such a configuration, a repulsive force of a refrigerant is applied to the fixed wrap 326 and the orbiting wrap 334 during a compression process, and a compressive force is applied to a space between the rotation shaft coupling portion 336 and the eccentric portion 53 as a reaction force. In a case where the eccentric portion 53 of the rotation shaft 5 is overlapped with the orbiting wrap 334 in a radius direction by passing through the orbiting scroll plate portion 332, a repulsive force and a compressive force of a refrigerant are applied to the same plane on the basis of the third plate portion 332 to be attenuated from each other. This may prevent a tilted state of the orbiting scroll 33 due to the compressive force and the repulsive force.

The rotation shaft 5 may be supported in a radius direction as an upper part thereof is forcibly-inserted into a central region of the rotator 22, and as a lower part thereof is coupled to the compression part 3.

The main bearing portion 51, supported in a radius direction in an inserted state into the first shaft accommodating portion 316, may be formed at a lower part of the rotation shaft 5. The sub bearing portion 52, supported in a radius direction in an inserted state into the second shaft accommodating portion 328, may be formed below the main bearing portion 51. The eccentric portion 53 may be formed between the main bearing portion 51 and the sub bearing portion 52, so as to be inserted into the rotation shaft coupling portion 336 of the orbiting scroll 33.

The main bearing portion 51 and the sub bearing portion 52 may be formed to be concentric with each other, and the eccentric portion 53 may be formed to be eccentric from the main bearing portion 51 or the sub bearing portion 52 in a radius direction. The sub bearing portion 52 may be formed to be eccentric from the main bearing portion 51.

An outer diameter of the eccentric portion 53 may be preferably formed to be smaller than that of the main bearing portion 51 but to be larger than that of the sub bearing portion 52, such that the rotation shaft 5 may be easily coupled to the eccentric portion 53 through the first and second shaft accommodating portions 316, 328 and the rotation shaft coupling portion 336. However, in case of forming the eccentric portion 53 using an additional bearing without integrally forming the eccentric portion 53 with the rotation shaft 5, the rotation shaft 5 may be coupled to the eccentric portion 53, without the configuration that the outer diameter of the eccentric portion 53 is larger than that of the sub bearing portion 52.

An oil supply passage 5a, along which oil is supplied to the bearing portions 51, 52 and the eccentric portion 53, may be formed in the rotation shaft 5. As the compression part 3 is disposed below the motor part 2, the oil supply passage 5a may be formed in a chamfering manner from a lower end of the rotation shaft 5 to a lower end of the stator 21 or to an intermediate height of the stator 21 approximately, or to a height higher than an upper end of the main bearing portion 51.

An oil feeder 6, configured to pump oil contained in the oil storage space, may be coupled to a lower end of the rotation shaft 5, i.e., a lower end of the sub bearing portion 52. The oil feeder 6 may include an oil supply pipe 61 insertion-coupled to the oil supply passage 5a of the rotation shaft 5, and an oil sucking member 62 (e.g., propeller) inserted into the oil supply pipe 61 and configured to suck oil. The oil supply pipe 61 may be installed to be immersed in the oil storage space via a though hole (not shown) of the discharge cover 34.

A balance weight 7 configured to restrain noise and vibrations may be coupled to the rotor 22 or the rotation shaft 5.

The balance weight 7 may be provided between the motor part 2 and the compression part 3, i.e., the first space (S1). The balance weight 7 may include a coupling portion 72 coupled to a lower surface of the rotor 22 or an outer circumferential surface of the rotation shaft 5; an extension portion 74 extended from the coupling portion 72 toward a lower side of the rotor 22; and a bending portion 76 bent from the extension portion 74, and protruded in a radius direction of the rotation shaft 5. In this embodiment, the end of the bending portion 76 may be a part farthest from a rotation center of the balance weight 7.

The flow path separator 8 may include a first partition wall portion 82 protruded from the first space (S1) in an axial direction, and configured to partition the first space (S1) into a refrigerant space (S11) and an oil space (S12); a second partition wall portion 84 disposed between the rotation shaft 5 and the first partition wall portion 82; and a connection portion 86 formed to cross the first and second partition wall portions 82, 84.

The first partition wall portion 82 may be formed in an approximate ring shape. One end of the first partition wall portion 82 may be positioned between an inlet of the first passage (P1) and an outlet of the second passage (P2), and another end thereof may be positioned between an inlet of the third passage (P3) and an outlet of a fourth passage (P4). With such a configuration, the second passage (P2) formed between an inner circumferential surface of the cylindrical shell 11 and an outer circumferential surface of the stator 21, may be separated from the first passage (P1) formed between slots 212b of the stator 21 and a gap between the stator 21 and the rotor 22. The second passage (P2) may be communicated with the third passage (P3) formed between an inner circumferential surface of the cylindrical shell 11 and an outer circumferential surface of the compression part 3. And the first passage (P1) may be communicated with the fourth passage (P4) formed between a discharge side of the compression part 3 and the first space (S1) and forming a discharge passage.

Preferably, two ends of the first partition wall portion 82 come in contact with the main frame 31 and the stator 21, respectively. However, considering damage during an assembly process, one end of the first partition wall portion 82 may be spaced from another member by an assembly tolerance, for minimization of refrigerant leakage.

The second partition wall portion 84 may be installed between an inlet of the first passage (P1) and the rotation shaft 5, or between an outlet of the discharge passage (Pd) and the balance weight 7, such that mixture of a refrigerant and oil at the first space (S1) due to rotation of the rotation shaft 5 and the balance weight 7 may be restricted.

The second partition wall portion 84 may be formed in a ring shape having a smaller radius than the first partition wall portion 82. One end of the second partition wall portion 84 may be disposed between an outlet of the discharge passage (Pd) and the rotation shaft 5 or the balance weight 7, and another end thereof may be disposed between a gap between the stator 21 and the rotor 22 and a bottom surface of the slot 212b.

The second partition wall portion 84 may be provided such that one end thereof may contact the main frame 31 like the first partition wall portion 82, and another end thereof may be spaced from the stator 21. With such a configuration, damage of the second partition wall portion 84 at a space between the stator 21 and the main frame 31 during an assembly process may be prevented. Further, since an area of the first passage (P1) is widened, a refrigerant may be smoothly moved to the second space (S2) from the first space (S1).

The connection portion 86 may be formed to cross the first and second partition wall portions 82, 84, thereby integrally modularizing the first and second partition wall portions 82, 84. This may facilitate fabrication of the scroll compressor, and may reduce the fabrication costs.

An unexplained reference numeral 35 denotes an Oldham's ring for preventing a rotation of the orbiting scroll, and 36 denotes a sealing member. A reference numeral 322b denotes a back pressure hole, and V1 denotes a back pressure chamber formed inside the Oldham's ring.

Hereinafter, an operation of the lower compression type scroll compressor according to this embodiment will be explained.

Firstly, once power is supplied to the motor part 2, the rotor 21 and the rotation shaft 5 are rotated as a rotational force is generated. As the rotation shaft 5 is rotated, the orbiting scroll 33 eccentrically-coupled to the rotation shaft 5 performs an orbiting motion by the Oldham's ring 35.

As a result, a refrigerant supplied from the outside of the casing 1 through the refrigerant suction pipe 15 is introduced into the compression chambers (V), and the refrigerant is compressed as a volume of the compression chambers (V) is reduced by the orbiting motion of the orbiting scroll 33. Then, the compressed refrigerant is discharged to an inner space of the discharge cover 34 through the discharge opening 322a.

Then, the refrigerant discharged to the inner space of the discharge cover 34 circulates at the inner space of the discharge cover 34, thereby having its noise reduced. Then, the refrigerant moves to the first space (S1) along the discharge passage (Pd).

The refrigerant which has moved to the first space (S1) does not move to the oil space (S12) by the flow path separator 8, but is guided to the first passage (P1) formed between slots 212b of the stator 21 and a gap between the stator 21 and the rotor 22 at the refrigerant space (S11), thereby moving to the second space (S2).

The refrigerant which has moved to the second space (S2) moves toward the refrigerant discharge pipe 16 at the second space (S2), and has oil separated therefrom. The oil-separated refrigerant is discharged to the outside of the scroll compressor through the refrigerant discharge pipe 16. On the other hand, the oil separated from the refrigerant moves to the oil space (S12) of the first space (S1), along the second passage (P2). The oil which has moved to the oil space (S12) does not move to the refrigerant space (S11) by the first partition wall portion 82 of the flow path separator 8, but is guided to an inlet of the third passage (P3). Then, the oil is collected in the oil storage space of the third space (S3). These processes are repeatedly performed.

Oil supplied to a sliding surface may perform a lubrication operation, and may be discharged to the first space (S1) between the first shaft accommodating portion 316 and the rotation shaft 5. The oil may be collected in the oil pocket 318, and then may be collected in the oil storage space of the third space (S3) along the oil collection passage 312a and the third passage (P3).

As aforementioned, in the scroll compressor according to this embodiment of the present invention, since the flow path separator 8 is provided between the motor part 2 and the compression part 3, a refrigerant passage and an oil passage may be separated from each other. As a result, oil discharged from the compression part together with a refrigerant passes through the motor part, and then is separated from a refrigerant at the second space, an upper space of the motor part. Then, the oil is collected in the oil storage space along the oil passage.

The second passage (P2) is formed as a plurality of spaces having a predetermined area between a plurality of cut-out surfaces 212a and an inner circumferential surface of the cylindrical shell 11 contacting the cut-out surfaces 212a. Here, the cut-out portions 212a are formed on an outer circumferential surface of the stator 21 with a predetermined gap therebetween. Since the second passage (P2) has a small area, oil separated from a refrigerant at the second space (P2) may not be smoothly discharged to the oil storage space along the second passage (P2), but may remain.

In order to solve such a problem, each of the plurality of spaces which constitute the second passage (P2) should have a wide area. In this case, an area of a magnetic path may be reduced, and performance of a motor with respect to the same diameter may be lowered.

Alternatively, instead of reducing the number of the cut-out surfaces 212a which constitute the second passage (P2), an area of each of the cut-out surfaces 212a may be increased. However, in this case, it is not easy to increase an area of the cut-out surface 212a when considering a position of the slits 212b of the stator 21, and an interval between the cut-out surfaces may be widened to cause oil to remain at the interval. Further, due to a non-uniform area of a magnetic path, performance of a motor with respect to the same diameter may be lowered.

Accordingly, may be further provided an oil collection unit capable of smoothly collecting oil separated from a refrigerant to the oil storage space, the third space (S3), without lowering performance of a motor with respect to the same diameter.

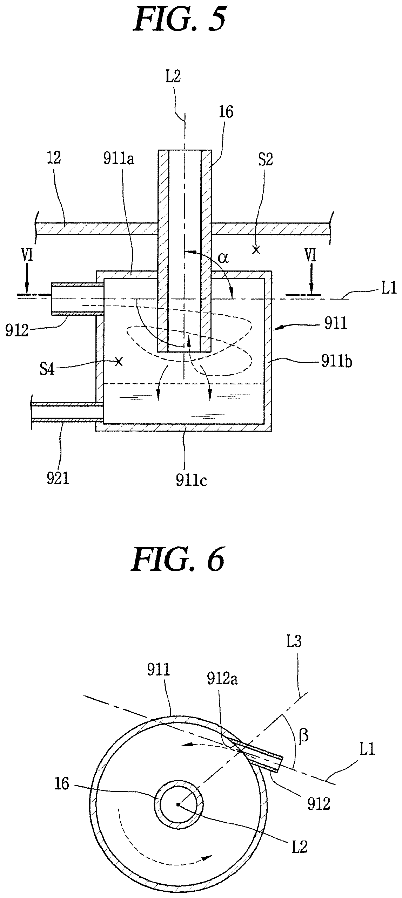

FIG. 5 is a longitudinal sectional view, which illustrates an oil separator in the lower compression type scroll compressor of FIG. 2. And FIG. 6 is a sectional view taken along line 'V-V' in FIG. 5.

Referring to FIGS. 2 and 4, an oil collection unit 9 according to this embodiment may include an oil separator 91 provided at the second space (S2) where a refrigerant and oil move in a mixed state, and an oil guiding portion 92 connected to the oil separator 91 and configured to guide oil separated by the oil separator 91 to the third space (S3).

As shown in FIGS. 5 and 6, the oil separator 91 may include an oil separation container 911 which forms a container having a predetermined oil separation space (S4) and with which one end of the oil guiding portion 92 is communicated; and a communication pipe 912 provided at one side of the oil separation container 911, and configured to communicate the oil separation space (S4) with the upper space (S2).

The oil separation container 911 may be formed to have a volume smaller than that of the second space (S2), and the refrigerant discharge pipe 16 which penetrates the casing 1 may be communicated with an upper surface 911a of the oil separation container 911. The communication pipe 912 and an oil collection pipe 921 of the oil guiding portion may be communicated with a side wall surface 911b of the oil separation container 911.

Preferably, an end part 912a of the communication pipe 912, serving as an inlet, is coupled to the side wall surface 911b of the oil separation container 911, i.e., a position separated from the refrigerant discharge pipe 16 by a predetermined angle. For instance, if the communication pipe 912 is communicated with a bottom surface 911c of the oil separation container 911, a refrigerant introduced into the oil separation space (S4) through the communication pipe 912 may be discharged with oil through the refrigerant discharge pipe 16. This may lower an oil separation effect.

Further, if the communication pipe 912 is communicated with an upper surface of the oil separation container 911, a refrigerant which has moved to the second space (S2) is guided to the communication pipe 912 after circulating along a long moving path. This may enhance an oil separation effect at the second space (S2). However, since the refrigerant should move from an upper side to a lower side, a flow resistance may be increased. This may cause the refrigerant not to be smoothly discharged. Therefore, considering an oil separation effect and a flow resistance at the second space (S2), the communication pipe 912 is preferably communicated with the side wall surface 911b such that a lengthwise center line (L1) at the end part 912a of the communication pipe 912 forms a predetermined angle (α) with an axial center line (L2) of the rotation shaft.

The communication pipe 912 may be communicated with the oil separation container 911 in a normal line direction. However, in this case, an oil separation effect may be lowered. As shown in FIG. 6, for an enhanced oil separation effect, the communication pipe 912 is preferably communicated with the oil separation container 911 such that the lengthwise center line (L1) at the end part 912a of the communication pipe 912 forms a predetermined angle (β) with a virtual line (L3) in a normal line direction towards an axial center of the oil separation container 911 (towards a center line of the rotation shaft center).

The oil guiding portion 92 may include the oil collection pipe 921 configured to collect oil separated at the oil separation container 911 to the oil storage space (S3); and an oil pump 922 installed at an outlet of the oil collection pipe 921 and configured to forcibly pump oil.

Referring to FIGS. 2 and 4, one end of the oil collection pipe 921 may be connected to the oil separation container 911, another end thereof may be connected to an inlet of the oil pump 922 via the stator core 212 of the driving motor 2, the first side wall portion 314 of the main frame 31, the second side wall portion 324 of the fixed scroll 32, and the discharge cover 34.

Preferably, the oil collection pipe 921 is disposed at a position lower than the communication pipe 912, for smooth collection of separated oil.

As the oil pump 922, various pumps may be used. Preferably, may be used a displacement pump for pumping oil using a rotational force of the rotation shaft 5, e.g., a trochoid gear pump. In this case, a plurality of suction openings 925a, 925b may be provided at a pump housing 925. One suction opening 925a may be open toward the oil storage space (S3), and another suction opening 925b may be connected to the oil collection pipe 921.

In the lower compression type scroll compressor, a refrigerant which moves to the second space (S2) has oil primarily-separated therefrom while circulating at the second space (S2). Then, the oil-separated refrigerant is introduced into the oil separation space (S4) of the oil separation container 911 through the communication pipe 912. And the oil separated from the refrigerant at the second space (S2) is collected in the third space (S3), the oil storage space of the casing 1, along the second passage (P2) and the third passage (P3).

A refrigerant, introduced into the oil separation space (S4) of the oil separation container 911, has oil secondarily-separated therefrom while circulating at the oil separation space (S4). Then, the oil-separated refrigerant is discharged to the outside of the scroll compressor through the refrigerant discharge pipe 16. On the other hand, the separated oil is collected in the oil storage space (S3) through the oil collection pipe 921. In this case, as the oil pump 922 installed at a bottom surface of the discharge cover 34 forcibly pumps the oil separated at the oil separation container 911, the separated oil may be rapidly collected in the oil storage space.

With such a configuration, even if the second passage formed between an inner circumferential surface of the casing and an outer circumferential surface of the stator has a narrow sectional area, the amount of oil separated at the second space is not large. This may reduce occurrence of a bottle neck phenomenon at the second passage, and may allow oil to be rapidly collected in the oil storage space.

Further, a refrigerant inside the second space (S2) has oil secondarily-separated therefrom through the oil separation container 911, before being discharged through the refrigerant discharge pipe 16. Then, the separated oil may be forcibly collected by the oil collection pipe 921 and the oil pump 922. With such a configuration, deficiency of the amount of oil at the oil storage space may be prevented, and thus frictional loss or abrasion of the scroll compressor may be prevented.

An example of an oil separator in the lower compression type scroll compressor, which does not fall within the scope of the claims, will be explained as follows.

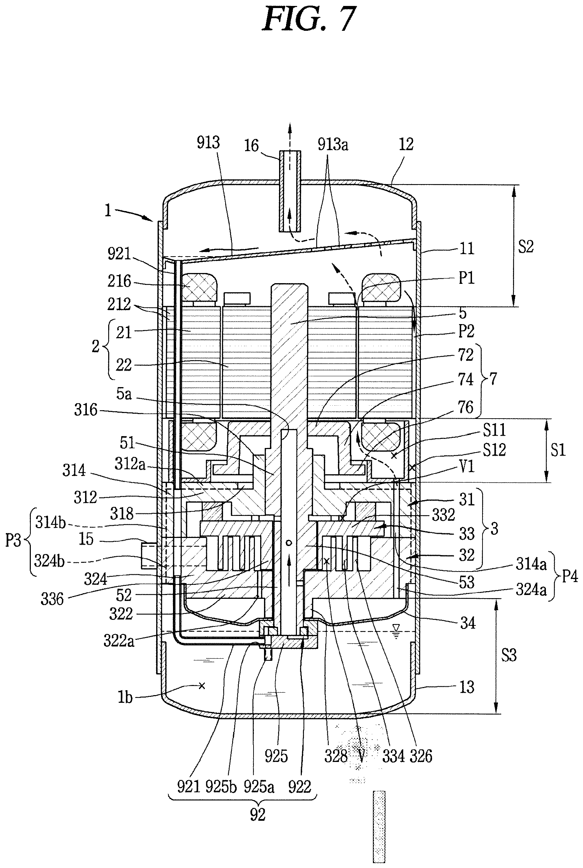

That is, in the aforementioned example, the oil separator is
implemented as the oil separation container having a hermetic oil separation space. However, in this example, as shown in FIG. 7, the oil separator is
implemented as an oil separation plate 913 having a disc shape and installed to divide the second space (S2) into two parts.

In this case, the oil separation plate 913 may be provided with a plurality of through holes 913a for communicating upper and lower sides of the second space (S2) with each other. One end of the oil collection pipe 921 may be connected to a bottom surface of one of the through holes 913a.

The oil separation plate 913 may be formed to have a disc shape. However, for smooth guidance of separated oil into the oil collection pipe 921, the oil separation plate 913 may be preferably formed to be inclined in a concaved manner on the basis of the oil collection pipe 921.

The oil separation unit including the oil separator according to this example has similar effects to the aforementioned ones. In this example,
the oil separator is more simplified than the aforementioned one to reduce the fabrication costs.

Another embodiment of the oil guiding portion in the lower compression type scroll compressor according to the present invention will be explained as follows.

That is, in the aforementioned embodiment, the oil guiding portion is provided with an additional oil pump configured to collect oil separated by the oil separator. However, in this embodiment, oil separated by the oil separator is forcibly collected by a differential pressure without an additional oil pump.

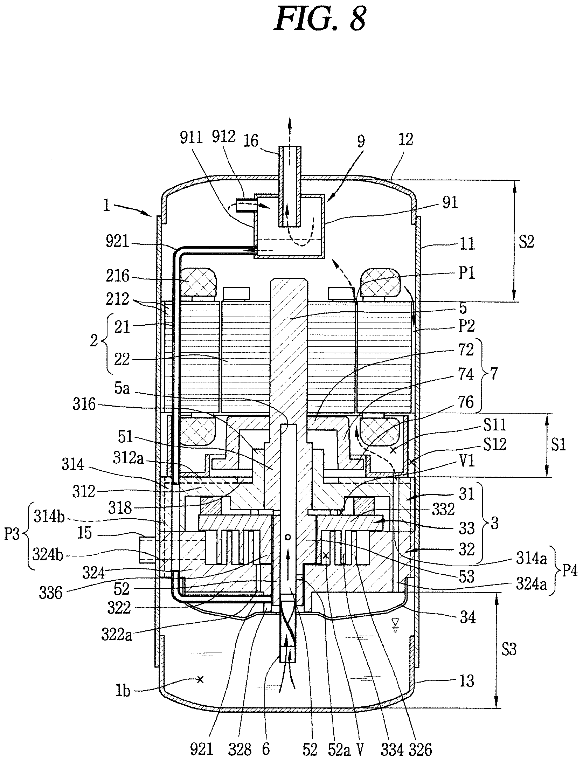

For instance, as shown in FIG. 8, an oil passing hole 328a may be formed at the second shaft accommodating portion 328 of the fixed scroll 32, such that an outlet of the oil collection pipe 921 may be communicated with a space between an outer circumferential surface of the rotation shaft 5 and an inner circumferential surface of the second shaft accommodating portion 328. With such a configuration, the oil collection pipe 921 may be communicated with the oil supply passage 5a of the rotation shaft 5.

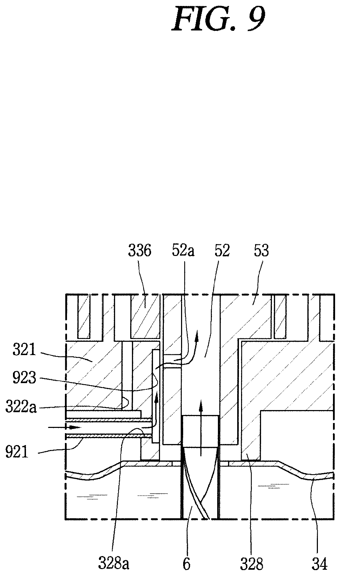

In this case, as shown in FIG. 9, an oil chamber 923 may be formed at the outlet of the oil collection pipe 921 (i.e., the inner circumferential surface of the second shaft accommodating portion 328), with an inner diameter equal to or larger than an inner diameter of an oil supply hole 52a provided at the sub bearing portion 52 of the rotation shaft 5, or equal to or larger than an inner diameter of the oil collection pipe (more precisely, the oil passing hole 328a provided at the second shaft accommodating portion of the fixed scroll). With such a configuration, oil collected in the oil collection pipe 921 may be contained in the oil chamber 923. This may allow the oil to be introduced into the oil supply passage 5a more smoothly.

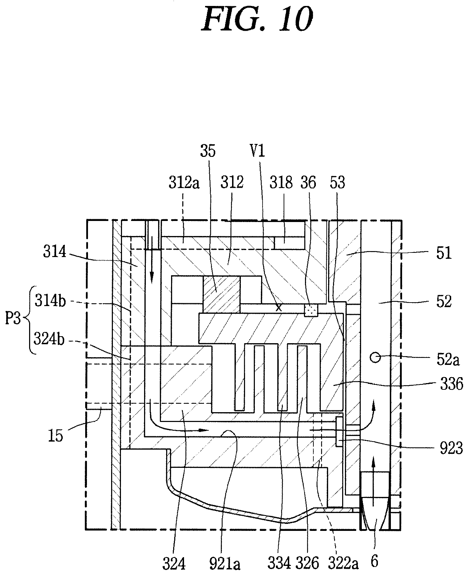

Further, similarly to the aforementioned embodiment, the oil collection pipe 921 may be communicated with the oil pump 922 through the stator core 212 of the driving motor 2, the first side wall portion 314 of the main frame 31, the second side wall portion 324 of the fixed scroll 32, and the discharge cover 34. However, as shown in FIG. 10, the oil collection pipe 921 may be communicated with an oil collection passage 921a formed at the fixed scroll 32 so as to be toward an inner circumferential surface of the second shaft accommodating portion 328.

In this case, the oil collection pipe 921 may be connected to the second shaft accommodating portion 328 of the fixed scroll 32, at a part of the third passage (P3) formed at the main frame 31 and the fixed scroll 32. As shown in FIG. 10, the oil collection passage 921a may be formed at the main frame 31 and the fixed scroll 32, separately from the third passage (P3).

The oil collection unit according to this embodiment has a similar configuration and effect to the aforementioned one. In this embodiment, the outlet of the oil collection unit 921 is communicated with a space between an outer circumferential surface of the rotation shaft 5 and an inner circumferential surface of the second shaft accommodating portion 328, the space having a lower pressure than the inside of the oil separation container 911. This may allow oil separated at the oil separation container to be rapidly moved to the oil supply passage of the rotation shaft, by a pressure difference.

That is, the inner space (S4) of the oil separation container 911 has a discharge pressure or a pressure similar to the discharge pressure, whereas a back pressure chamber (V1) communicated with the oil supply passage 5a of the rotation shaft 5 has an intermediate pressure. Thus, once the inner space (S4) of the oil separation container 911 is communicated with the oil supply passage 5a by the oil collection pipe 921, oil inside the oil separation container 911 moves to the back pressure chamber (V1) via the oil collection pipe 921 and the oil supply passage 5a, by a pressure difference between the inside of the oil separation container 911 and the inside of the back pressure chamber (V1). Then, the oil which has moved to the back pressure chamber (V1) slides over the Oldham's ring 35. Then, the oil is introduced into the compression chambers (V) while lubricating a sliding surface between the fixed scroll 32 and the orbiting scroll 33, and then is discharged. These processes are repeatedly performed.

The outlet of the oil collection pipe 921 may be communicated with any region where a differential pressure may be generated, as well as the oil supply passage 5a. In this embodiment, oil is collected by using a differential pressure without an oil pump. This may reduce the fabrication costs of the oil pump.

Still another embodiment of the oil guiding portion in the lower compression type scroll compressor according to the present invention will be explained as follows.

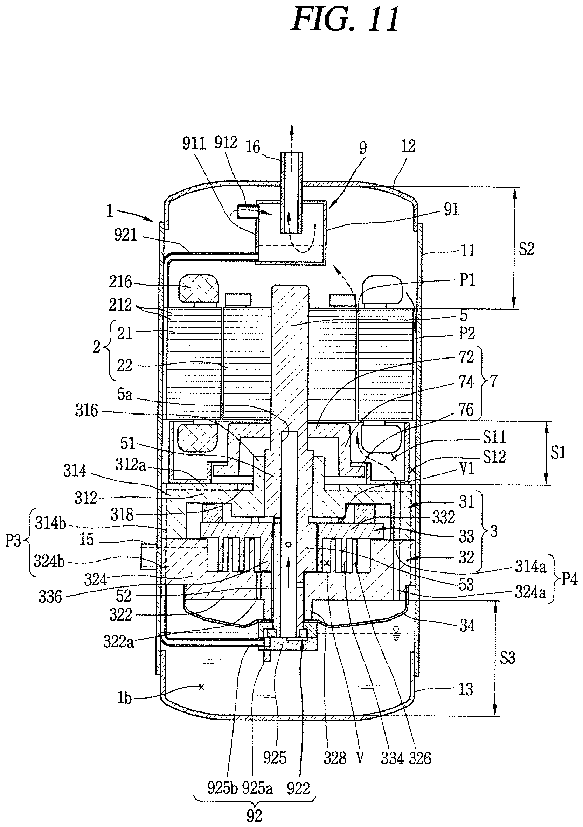

In the aforementioned embodiments, the oil collection pipe is communicated with the oil pump or the oil supply passage, through the driving motor, the main frame, the fixed scroll and the discharge cover. However, in this embodiment, as shown in FIG. 11, a first oil collection pipe 921A may be connected to one of cut-out surfaces 212a formed on an outer circumferential surface of the stator 21, i.e., an inlet of the second passage (P2). And a second oil collection pipe 924B may be connected to an outlet of the third passage (P3), i.e., a lower end of the second communication groove 324b of the fixed scroll 32. In this case, a basic configuration and effects are similar to the aforementioned ones, and thus detailed explanations thereof will be omitted. In this embodiment, assembly processes may be facilitated and the fabrication cost may be reduced, since the oil collection pipe does not pass through the driving motor, etc.

In the aforementioned embodiments, the lower compression type scroll compressor was explained as an example. However, in some cases, the present invention may be also applicable to any compressor having a compression part at a lower region of a casing, e.g., a rotary compressor.

## Claims

1. A scroll compressor, comprising:
a casing (1) which contains oil at a lower space thereof, the casing including a refrigerant suction pipe (15) through which a refrigerant is suctioned into the casing and a refrigerant discharge pipe (16) through which the refrigerant is discharged;
a driving motor (2) provided at a position spaced from an upper end of the casing by a predetermined gap, such that an upper space is formed in the casing;
a rotation shaft (5) coupled to a rotor (22) of the driving motor, and having an oil supply passage (5a) to guide the oil contained in the casing to an upper side;
a frame (31) provided below the driving motor;
a fixed scroll (32) provided below the frame, and having a fixed wrap (326);
an orbiting scroll (33) provided between the frame and the fixed scroll, having an orbiting wrap (334) so as to form a compression chamber (V, V1, V2) by being engaged with the fixed wrap, and having a rotation shaft coupling portion (336) for coupling the rotation shaft thereto in a penetrating manner, and
an oil collection unit (9) including an oil separator (91) provided at the upper space of the casing and configured to separate oil from the refrigerant, and including an oil guiding portion (92) configured to guide the oil separated by the oil separator to the lower space of the casing,
**characterized in that** the oil separator includes:
an oil separation container (911) coupled to one end of the refrigerant discharge pipe (16) which penetrates the casing and separated from the drive motor, the oil separation container (911) having a predetermined oil separation space (S4), and with which one end of the oil guiding portion is communicated; and
a communication pipe (912) provided at one side of the oil separation container (911), and configured to communicate the oil separation space with the upper space.

2. The scroll compressor of claim 1, wherein a lengthwise center line of the communication pipe (912) at an end of the communication pipe forms a predetermined angle with the rotation shaft in an axial direction.

3. The scroll compressor of claim 1,
wherein a lengthwise center line of the refrigerant discharge pipe forms a predetermined angle with the lengthwise center line of the communication pipe.

4. The scroll compressor of claim 1, wherein the oil guiding portion (92) includes:
an oil collection pipe (921) having one end connected directly to the oil separation container; and
an oil pump (922) having an inlet to which another end of the oil collection pipe is connected, and configured to pump oil separated at the oil separation container.

5. The scroll compressor of claim 1, wherein the oil guiding portion is formed as an oil collection pipe having one end connected directly to the oil separation container, and
wherein another end of the oil collection pipe is directly communicated with a region having a lower pressure than an inner pressure of the oil separation container.

6. The scroll compressor of claim 5, wherein an oil supply passage (5a) for guiding oil contained in the casing is formed at the rotation shaft, and a shaft accommodating portion for supporting the rotation shaft is formed at the fixed scroll,
wherein an oil supply hole for guiding oil sucked through the oil supply passage to a bearing surface with the shaft accommodating portion (328) is formed at the rotation shaft, and
wherein an oil passing hole (328a) is formed at the shaft accommodating portion such that another end of the oil collection pipe is communicated with the oil passing hole.

7. The scroll compressor of claim 6, wherein an oil chamber (923) communicated with the oil passing hole is formed on an outer circumferential surface of the rotation shaft, or an inner circumferential surface of the shaft accommodating portion corresponding thereto.

8. The scroll compressor of any one of claims 1 to 7, wherein the driving
motor includes a stator (21) fixed to an inner circumferential surface of the casing, and the rotor rotatably provided in the stator with an air gap which forms a first passage (P1),
wherein a plurality of cut-out surfaces (212a) are formed on an outer circumferential surface of the stator in a circumferential direction, such that a space which forms a second passage (P2) is formed between the outer circumferential surface of the stator and the inner circumferential surface of the casing, and
wherein a passage separator (8) configured to separate the first and second passages from each other is provided between the driving motor and the frame.

9. The scroll compressor of claim 1, wherein an inner space of the casing is divided into an oil storage space (1b) for containing oil, and a mixture space (S2) for containing a refrigerant and oil in a mixed state,
wherein the driving motor is provided at the mixture space of the casing,
wherein the oil separator configured to separate oil from a refrigerant at the mixture space, and
wherein a one end of the oil guiding portion is directly connected to the oil separator, and another end of the oil guiding portion is communicated with the oil storage space and configured to guide the oil separated by the oil separator to the oil storage space.

10. The scroll compressor of claim 9,
wherein the oil separator is
implemented as a container having a hermetic oil separation space (S4),
wherein the container has an inlet which communicates the mixture space and the oil separation space with each other, and a center line of the inlet forms an angle with a center line of the first passage.

11. The scroll compressor of claim 9 or 10, , wherein the another end of
the oil guiding portion is directly connected to an inlet of an oil pump which pumps oil to the oil supply passage of the rotation shaft.

12. The scroll compressor of claim 9 or 10, , wherein the another end of
the oil guiding portion is directly connected to an oil supply passage of the rotation shaft, such that oil is guided to the oil supply passage by a pressure difference between two ends of the oil guiding portion.

## Patentansprüche

1. Spiralverdichter, der aufweist:
ein Gehäuse (1), das in dessen unterem Raum Öl enthält, wobei das Gehäuse ein Kältemittelansaugrohr (15), durch das Kältemittel in das Gehäuse gesaugt wird, und ein Kältemittelausstoßrohr (16) aufweist, durch das das Kältemittel ausgestoßen wird;
einen Antriebsmotor (2), der an einer Position vorgesehen ist, die von einem oberen Ende des Gehäuses durch einen vorbestimmten Abstand beabstandet ist, so dass ein oberer Raum im Gehäuse ausgebildet ist;
eine Drehwelle (5), die mit einem Rotor (22) des Antriebsmotors gekoppelt ist und einen Ölzufuhrkanal (5a) aufweist, um das im Gehäuse enthaltene Öl zu einer oberen Seite zu führen;
einen Rahmen (31), der unter dem Antriebsmotor vorgesehen ist;
eine feststehende Spirale (32), die unter dem Rahmen vorgesehen ist und eine feststehende Windung (326) aufweist;
eine umlaufende Spirale (33), die zwischen dem Rahmen und der feststehenden Spirale vorgesehen ist, eine umlaufende Windung (334) aufweist, um eine Verdichtungskammer (V, V1, V2) zu bilden, indem sie mit der feststehenden Windung in Eingriff steht, und
einen Drehwellenkopplungsabschnitt (336) aufweist, um die Drehwelle damit in einer eindringenden Weise zu koppeln, und
eine Ölsammeleinheit (9), die einen Ölabscheider (91) aufweist, der im oberen Raum des Gehäuses vorgesehen und konfiguriert ist, Öl vom Kältemittel abzuscheiden, und einen Ölführungsabschnitt (92) aufweist, der konfiguriert ist, das durch den Ölabscheider abgeschiedene Öl zum unteren Raum des Gehäuses zu führen,
**dadurch gekennzeichnet, dass** der Ölabscheider aufweist:
einen Ölabscheidebehälter (911), der mit einem Ende des Kältemittelausstoßrohrs (16) gekoppelt ist, das in das Gehäuse eindringt, und vom Antriebsmotor getrennt ist, wobei der Ölabscheidebehälter (911) einen vorbestimmten Ölabscheideraum (S4) aufweist, und
mit dem ein Ende des Ölführungsabschnitts in Verbindung steht; und
ein Verbindungsrohr (912), das auf einer Seite des Ölabscheidebehälters (911) vorgesehen und konfiguriert ist, den Ölabscheideraum mit dem oberen Raum zu verbinden.

2. Spiralverdichter nach Anspruch 1, wobei eine Längsmittellinie des Verbindungsrohrs (912) an einem Ende des Verbindungsrohrs mit der Drehwelle in einer axialen Richtung einen vorbestimmten Winkel bildet.

3. Spiralverdichter nach Anspruch 1, wobei eine Längsmittellinie des Kältemittelausstoßrohrs mit der Längsmittellinie des Verbindungsrohrs einen vorbestimmten Winkel bildet.

4. Spiralverdichter nach Anspruch 1, wobei der Ölführungsabschnitt (92) aufweist:
ein Ölsammelrohr (921), von dem ein Ende direkt mit dem Ölabscheidebehälter verbunden ist; und
eine Ölpumpe (922) mit einem Einlass, mit dem ein anderes Ende des Ölsammelrohrs verbunden ist, und die konfiguriert ist, am Ölabscheidebehälter abgeschiedenes Öl zu pumpen.

5. Spiralverdichter nach Anspruch 1, wobei der Ölführungsabschnitt als ein Ölsammelrohr ausgebildet ist, von dem ein Ende direkt mit dem Ölabscheidebehälter verbunden ist, und wobei ein anderes Ende des Ölsammelrohrs direkt mit einem Bereich verbunden ist, der einen niedrigeren Druck als einen Innendruck des Ölabscheidebehälters aufweist.

6. Spiralverdichter nach Anspruch 5, wobei ein Ölzufuhrkanal (5a) zum Führen des im Gehäuse enthaltenen Öls an der Drehwelle ausgebildet ist, und ein Wellenaufnahmeabschnitt zum Halten der Drehwelle an der feststehenden Spirale ausgebildet ist,
wobei ein Ölzufuhrloch zum Führen des durch den Ölzufuhrkanal angesaugten Öls zu einer Lagerfläche mit dem Wellenaufnahmeabschnitt (328) an der Drehwelle ausgebildet ist, und
wobei ein Öldurchgangsloch (328a) am Wellenaufnahmeabschnitt so ausgebildet ist, dass ein anderes Ende des Ölsammelrohrs mit dem Öldurchgangsloch in Verbindung steht.

7. Spiralverdichter nach Anspruch 6, wobei eine Ölkammer (923), die mit dem Öldurchgangsloch in Verbindung steht, an einer Außenumfangsfläche der Drehwelle oder an einer dazu entsprechenden Innenumfangsfläche des Wellenaufnahmeabschnitts ausgebildet ist.

8. Spiralverdichter nach einem der Ansprüche 1 bis 7, wobei der Antriebsmotor einen Stator (21), der an einer Innenumfangsfläche des Gehäuses befestigt ist, und den Rotor aufweist, der drehbar im Stator mit einem Luftspalt vorgesehen ist, der einen ersten Kanal (P1) bildet,
wobei mehrere ausgeschnittene Flächen (212a) an einer Außenumfangsfläche des Stators in einer Umfangsrichtung ausgebildet sind, so dass ein Raum, der einen zweiten Kanal (P2) bildet, zwischen der Außenumfangsfläche des Stators und der Innenumfangsfläche des Gehäuses ausgebildet ist, und
wobei ein Kanalseparator (8), der konfiguriert ist, den ersten und zweiten Kanal voneinander zu trennen, zwischen dem Antriebsmotor und dem Rahmen vorgesehen ist.

9. Spiralverdichter nach Anspruch 1, wobei ein Innenraum des Gehäuses in einen Ölspeicherraum (1b) zur Aufnahme von Öl und einen Mischraum (S2) zur Aufnahme eines Kältemittels und von Öl in einem gemischten Zustand unterteilt ist,
wobei der Antriebsmotor im Mischraum des Gehäuses vorgesehen ist,
wobei der Ölabscheider konfiguriert ist, Öl von einem Kältemittel im Mischraum abzuscheiden, und
wobei ein Ende des Ölführungsabschnitts direkt mit dem Ölabscheider verbunden ist, und ein anderes Ende des Ölführungsabschnitts mit dem Ölspeicherraum verbunden und konfiguriert ist, durch den Ölabscheider abgeschiedenes Öl zum Ölspeicherraum zu führen.

10. Spiralverdichter nach Anspruch 9, wobei der Ölabscheider als ein Behälter mit einem hermetischen Ölabscheideraum (S4) implementiert ist,
wobei der Behälter einen Einlass aufweist, der den Mischraum und den Ölabscheideraum miteinander verbindet, und eine Mittellinie des Einlasses mit einer Mittellinie des ersten Kanals einen Winkelt bildet.

11. Spiralverdichter nach Anspruch 9 oder 10, wobei das andere Ende des Ölführungsabschnitts direkt mit einem Einlass einer Ölpumpe verbunden ist, die Öl zum Ölzufuhrkanal der Drehwelle pumpt.

12. Spiralverdichter nach Anspruch 9 oder 10, wobei das andere Ende des Ölführungsabschnitts direkt mit einem Ölzufuhrkanal der Drehwelle verbunden ist, so dass Öl durch eine Druckdifferenz zwischen zwei Enden des Ölführungsabschnitts zum Ölzufuhrkanal gepumpt wird.

## Revendications

1. Compresseur à spirales, comprenant :
un carter (1) contenant de l'huile dans un espace inférieur, ledit carter comprenant une conduite d'aspiration de réfrigérant (15) par laquelle un réfrigérant est aspiré dans le carter et une conduite de refoulement de réfrigérant (16) par laquelle le réfrigérant est refoulé ;
un moteur d'entraînement (2) prévu à un emplacement espacé d'un intervalle défini d'une extrémité supérieure du carter, de manière à former un espace supérieur dans le carter ;
un arbre rotatif (5) raccordé à un rotor (22) du moteur d'entraînement, et comportant un passage d'alimentation en huile (5a) pour guider l'huile contenue dans le carter vers un côté supérieur ;
un châssis (31) prévu en dessous du moteur d'entraînement ;
une spirale fixe (32) prévue en dessous du châssis, et comportant une volute fixe (326) ;
une spirale orbitale (33) prévue entre le châssis et la spirale fixe, comportant une volute orbitale (334) de manière à former une chambre de compression (V, V1, V2) en étant en prise avec la volute fixe, et comportant une partie d'accouplement d'arbre rotatif (336) pour l'accouplement par pénétration de l'arbre rotatif, et
une unité de récupération d'huile (9) comprenant un séparateur d'huile (91) disposé dans l'espace supérieur du carter et prévu pour séparer l'huile du réfrigérant, et comprenant une unité de guidage d'huile (92) prévue pour guide l'huile séparée par le séparateur d'huile vers l'espace inférieur du carter,
**caractérisé en ce que** le séparateur d'huile comprend :
un récipient de séparation d'huile (911) raccordé à une extrémité de la conduite de refoulement de réfrigérant (16) introduite dans le carter et séparé du moteur d'entraînement, ledit récipient de séparation d'huile (911) comportant un espace de séparation d'huile défini (S4), et avec lequel communique une extrémité de l'unité de guidage d'huile ; et
une conduite de communication (912) disposée sur un côté du récipient de séparation d'huile (911), et prévue pour relier l'espace de séparation d'huile à l'espace supérieur.

2. Compresseur à spirales selon la revendication 1, où une ligne centrale longitudinale de la conduite de communication (912) à une extrémité de la conduite de communication forme un angle défini avec l'arbre rotatif dans une direction axiale.

3. Compresseur à spirales selon la revendication 1, où une ligne centrale longitudinale de la conduite de refoulement de réfrigérant forme un angle défini avec la ligne centrale longitudinale de la conduite de communication.

4. Compresseur à spirales selon la revendication 1, où l'unité de guidage d'huile (92) comprend :
une conduite de récupération d'huile (921) ayant une extrémité directement raccordée au récipient de séparation d'huile ; et
une pompe à huile (922) ayant une entrée à laquelle est raccordée une autre extrémité de la conduite de récupération d'huile, et prévue pour pomper l'huile séparée sur le récipient de séparation d'huile.

5. Compresseur à spirales selon la revendication 1, où l'unité de guidage d'huile est formée comme conduite de récupération d'huile ayant une extrémité directement raccordée au récipient de séparation d'huile, et
où une autre extrémité de la conduite de récupération d'huile communique directement avec une zone dont la pression est inférieure à une pression intérieure du récipient de séparation d'huile.

6. Compresseur à spirales selon la revendication 5, où un passage d'alimentation en huile (5a) pour guider l'huile contenue dans le carter est formé sur l'arbre rotatif, et une partie de réception d'arbre destinée à supporter l'arbre rotatif est formée sur la spirale fixe,
où un orifice d'alimentation en huile pour le guidage de l'huile aspirée par le passage d'alimentation en huile vers une surface de palier avec la partie de réception d'arbre (328) est formé sur l'arbre rotatif, et
où un orifice de passage d'huile (328a) est formé sur la partie de réception d'arbre de telle manière qu'une autre extrémité de la conduite de récupération d'huile communique avec l'orifice de passage d'huile.

7. Compresseur à spirales selon la revendication 6, où une chambre à huile (923) communiquant avec l'orifice de passage d'huile est formée sur une surface circonférentielle extérieure de l'arbre rotatif, ou une surface circonférentielle intérieure de la partie de réception d'arbre correspondant à celle-ci.

8. Compresseur à spirales selon l'une des revendications 1 à 7, où le moteur d'entraînement comprend un stator (21) fixé à une surface circonférentielle intérieure du carter, et le rotor prévu de manière rotative dans le stator avec un entrefer formant un premier passage (P1), où une pluralité de surfaces découpées (212a) sont formées sur une surface circonférentielle extérieure du stator dans une direction circonférentielle, de telle manière qu'un espace formant un deuxième passage (P2) est formé entre la surface circonférentielle extérieure du stator et la surface circonférentielle intérieure du carter, et où un séparateur de passages (8) prévu pour séparer l'un de l'autre le premier et le deuxième passages est prévu entre le moteur d'entraînement et le châssis.

9. Compresseur à spirales selon la revendication 1, où un espace intérieur du carter est divisé en un espace de stockage d'huile (1b) destiné à contenir de l'huile, et un espace de mélange (S2) destiné à contenir un réfrigérant et de l'huile en état de mélange,
où le moteur d'entraînement est prévu sur l'espace de mélange du carter,
où le séparateur d'huile est prévu pour séparer l'huile d'un réfrigérant sur l'espace de mélange, et
où une première extrémité de l'unité de guidage d'huile est directement raccordée au séparateur d'huile, et une autre extrémité de l'unité de guidage d'huile communique avec l'espace de stockage d'huile et est prévue pour guider l'huile séparée par le séparateur d'huile vers l'espace de stockage d'huile.

10. Compresseur à spirales selon la revendication 9, où le séparateur d'huile est réalisé comme récipient comportant un espace de séparation d'huile (S4) hermétique,
où le container présente une entrée faisant communiquer l'espace de mélange avec l'espace de séparation d'huile, et une ligne centrale de l'entrée forme un angle avec une ligne centrale du premier passage.

11. Compresseur à spirales selon la revendication 9 ou la revendication 10, où l'autre extrémité de l'unité de guidage d'huile est directement raccordée à une entrée d'une pompe à huile pompant l'huile vers le passage d'alimentation en huile de l'arbre rotatif.

12. Compresseur à spirales selon la revendication 9 ou la revendication 10, où l'autre extrémité de l'unité de guidage d'huile est directement raccordée à un passage d'alimentation en huile de l'arbre rotatif, de manière à guider l'huile vers le passage d'alimentation en huile sous l'effet d'un différentiel de pression entre les deux extrémités de l'unité de guidage d'huile.
